# EUROPÄISCHE PATENTSCHRIFT

(11) **EP 3 415 783 B1**
(45) Veröffentlichungstag und Bekanntmachung des Hinweises auf die Patenterteilung: **05.08.2020**
(21) Anmeldenummer: 18175528.1
(22) Anmeldetag: 01.06.2018
(51) Int. Cl.: F16D 65/12

(54) **BREMSSCHEIBEN-/NABENVERBINDUNG**
BRAKE DISK/HUB CONNECTION
RACCORDEMENT DISQUE DE FREIN / MOYEU

(30) Priorität: 14.06.2017 DE 102017113128
(43) Veröffentlichungstag der Anmeldung: 19.12.2018
(73) Patentinhaber: KNORR-BREMSE Systeme für Nutzfahrzeuge GmbH, 80809 München (DE)
(72) Erfinder: KOTTEDER, Stephan, 94486 Osterhofen (DE); PAHLE, Wolfgang, 83707 Bad Wiessee (DE)

(56) Entgegenhaltungen:
- EP-A2- 0 849 487
- DE-A1-102008 014 857
- US-A1- 2007 193 837
- US-A1- 2009 218 183
- US-A1- 2012 247 883

## Beschreibung

Die vorliegende Erfindung betrifft eine Bremsscheiben-/Nabenverbindung gemäß dem Oberbegriff des Anspruchs 1.

Bei gattungsgemäßen Bremsscheiben-/Nabenverbindungen, bei der die Verbindung der Bremsscheibe mit der Nabe mittels zahnartiger, ineinander greifender Elemente an der Nabe und in der Bremsscheibe erfolgt, die eine Übertragung des Bremsmomentes von der Bremsscheibe auf die Nabe gewährleisten, kann die Bremsscheibe sich infolge einer Hitzeentwicklung beim Bremsen radial relativ zur Nabe ausdehnen, was die Hitzerissbeständigkeit der Bremsscheibe verbessert.

Eine solche gattungsgemäße Bremsscheiben-/Nabenverbindung ist beispielsweise aus der DE 199 18 069 A1 bekannt.

Die Bremsscheiben-/Nabenverbindung ist dabei bei einem Bremsvorgang unterschiedlichen Belastungen ausgesetzt.

Aus der WO 97/48 919 A1 ist eine Bremsscheiben-/Nabenverbindung bekannt, bei der die Bremsscheibe in Axialrichtung auf einer Seite durch einen starren Anschlag in Gestalt eines Sicherungsringes und auf der anderen Seite mittels einem federelastischem Sicherungsring festgelegt ist. Der federelastische Sicherungsring ist hierbei voll umlaufend ausgebildet und wird mit der Nabe verschraubt. Der Anschlag dient dabei der axialen Sicherung der Bremsscheibe an der Nabe.

Des weiteren ist es bekannt, dass durch die hohe thermische Beanspruchung der Bremsscheibe innere Bauteilspannungen auftreten können, die zu einem Klemmen der Bremsscheibe an der Nabe führen kann, welches zum einen die thermische Ausdehnung der Bremsscheibe und auch die Demontage der Bremsscheibe von der Nabe erschwert.

Dazu ist es beispielsweise aus der DE 10 2008 014 857 A1 bekannt, Zwischenelemente zwischen die im Folgenden als Mitnehmer bezeichneten Zähne der Nabe, die sich in axialer Richtung zu einer der Nabe und der Bremsscheibe gemeinsamen Drehachse von einem Radflansch der Nabe erstrecken und den als Stützelemente bezeichneten Zähnen der Bremsscheibe, die sich von einem inneren Umfang der Bremsscheibe in Richtung der Drehachse erstrecken, einzufügen, durch die ein direkter Wärmeübergang verhindert wird.

Darüber hinaus besteht die Problematik, dass bei solchen radial verzahnten Bremsscheiben beim Bremsvorgang an einzelnen Verzahnungselementen unterschiedlich hohe mechanische Spannungen infolge der Drehmomentübertragung von den Stützelementen der Bremsscheibe auf die Mitnehmer der Nabe entstehen. Die hierbei wirkenden Reaktionskräfte sind dabei abhängig vom Drehwinkel des jeweiligen Stützelementes und entsprechend des das Drehmoment aufnehmenden Mitnehmers.

Aus der US 2009/218183 A1 und der US 2012/0247883 A1 sind eine Bremsscheiben-/Nabenverbindung bekannt, bei denen die Mitnehmer der Nabe über einen Koppelring miteinander verbunden sind. Die Mitnehmer der US 2012/0247883 A1 erstrecken sich dabei radial von einem Nabenhals der Nabe.

Aufgabe der vorliegenden Erfindung ist es, eine Bremsscheiben-/Nabenverbindung bereitzustellen, mit der eine gleichmäßigere Verteilung des Bremsmoments auf die Mitnehmer der Nabe und die Stützelemente der Bremsscheibe erreichbar ist.

Diese Aufgabe wird durch eine Bremsscheiben/Nabenverbindung mit den Merkmalen des Anspruchs 1 gelöst.

Vorteilhafte Weiterbildungen der Erfindung sind den Unteransprüchen zu entnehmen.

Bei der erfindungsgemäßen Bremsscheiben/Nabenverbindung, bei der eine Nabe sich in axialer Richtung zu einer der Nabe und einer Bremsscheibe gemeinsamen Drehachse von einem Radflansch der Nabe erstreckende Mitnehmer aufweist, die zwischen am inneren Umfang der Bremsscheibe angeordnete, sich in Richtung der Drehachse erstreckende Stützelemente zahnartig eingreifen, sind die Mitnehmer der Nabe über eine sich an den Stützelementen der Bremsscheibe abstützende, in Umfangsrichtung der Bremsscheibe formstabile Koppeleinrichtung miteinander gekoppelt.
Der Koppelring weist einen flachringförmigen Grundkörper auf, mit Bohrungen zur Durchführung von Befestigungsbolzen, mit denen der Koppelring an den Mitnehmern der Nabe befestigt, insbesondere verschraubt wird. Die Befestigungsbolzen sind dabei an den Mitnehmern der Nabe zur in Richtung der Drehachse axialen Sicherung der Bremsscheibe befestigbar.

Der Koppelring weist zur zusätzlichen ortsfesten Fixierung an der Nabe Ausnehmungen auf, in denen sich axial zur Drehachse erstreckende Fortsätze von zwischen seitlichen Flanken der Mitnehmer und der Stützelemente angeordneten Zwischenelementen aufnehmbar sind.

Durch die Kopplung der Mitnehmer der Nabe über eine solche Koppeleinrichtung ist es ermöglicht, dass bei einem Bremsvorgang auftretende Bremsmoment gleichmäßiger auf die einzelnen Mitnehmer der Nabe und Stützelemente der Bremsscheibe zu verteilen.

Damit einher geht auch eine Erhöhung der Sicherheit der Bremsscheiben/Nabenverbindung sowie eine signifikante Erhöhung der Lebensdauer der Nabe und der Bremsscheibe.

Gleichzeitig wird durch die Kopplung der Mitnehmer der Nabe durch die Koppeleinrichtung eine axiale Sicherung der Bremsscheibe an der Nabe erreicht.

Die Koppeleinrichtung ist dabei bevorzugt an jeweiligen, einen Radflansch der Nabe abgewandten Stirnflächen der Mitnehmer befestigt, insbesondere verschraubt.

Die Koppeleinrichtung liegt des Weiteren bevorzugt an jeweiligen der Nabe abgewandten Stirnflächen der Stützelementen der Bremsscheibe an und sichert damit die Bremsscheibe in ihrer axialen Position an der Nabe.

Die radiale Breite des Koppelrings kann nach einer weiteren Ausführungsvariante durchgehend gleich ausgebildet sein.

In einer alternativen Ausführungsvariante ist die radiale Breite des Koppelrings in einem sich auf den Mitnehmern der Nabe abstützenden Bereich größer als in einem sich auf den Stützelementen der Bremsscheibe abstützenden Bereich.

Um eine axiale Fixierung der Bremsscheibe an der Bremsnabe mit einem vorbestimmten Spiel zu ermöglichen, sind nach einer weiteren bevorzugten Ausführungsvariante am flachringförmige Grundkörper des Koppelrings mehrere in Richtung der Drehachse wirkende Federelemente ausgebildet.

Die Koppeleinrichtung in Gestalt eines Koppelrings oder einzelner Koppelelemente sind dabei bevorzugt als Gußbauteile, Schmiedebauteile, Sinterbauteile oder auch als gestanzte Bauteile ausgebildet.

Nachfolgend werden Ausführungsvarianten anhand der beiliegenden Zeichnungen näher erläutert.

Es zeigen:
- Fig. 1: eine perspektivische Ansicht einer auf eine Nabe aufgesetzten Bremsscheibe mit abgenommener als Koppelring ausgebildeter Koppeleinrichtung,
- Fig. 2: eine perspektivische Darstellung einer ersten Ausführungsvariante einer als Koppelring ausgebildeten Koppeleinrichtung,
- Fig. 3: eine perspektivische Ansicht der in Fig. 1 gezeigten Bremsscheiben-/Nabenverbindung im montierten Zustand der Koppeleinrichtung,
- Fig. 4-6: perspektivische Ansichten weiterer Ausführungsvarianten von als Koppelring ausgebildeten Koppeleinrichtungen,
- Fig. 7: eine perspektivische Ansicht einer mit mehreren Koppelelementen an einer Nabe festgelegten Bremsscheibe,
- Fig. 8a und 8b: perspektivische Darstellungen eines solchen Koppelelements sowie einer Anordnung mehrerer solcher Koppelelemente zu einem Koppelring.
- Fig. 9: eine perspektivische Ansicht einer mit mehreren alternativ ausgebildeten Koppelelementen an einer Nabe festgelegten Bremsscheibe und
- Fig. 10a bis 10c: unterschiedliche Darstellungen eines solchen Koppelelements sowie einer Anordnung mehrerer solcher Koppelelemente zu einem Koppelring.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Bremsscheiben-/Nabenverbindung, der Nabe, der Bremsscheibe, der Mitnehmer, der Stützelemente, des Koppelrings, der Koppelelemente und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

In dem **Fig**. **1**, **3**, **7** **und** **9** ist eine jeweilige Bremsscheiben-/Nabenverbindung dargestellt, bei der eine ringförmige, innen belüftete Bremsscheibe 3 mit zwei durch Stege voneinander beabstandeten Reibringen 31, 32 an einer Nabe 2 angeordnet ist.

Die Bremsscheibe 3 wird dabei axial zu einer gemeinsamen Drehachse der Nabe 2 und der Bremsscheibe 3 auf die Nabe 2 aufgesetzt.

Zur Übertragung von Dreh- bzw. Bremsmomenten bei Bremsvorgängen weist die Nabe 2 sich in axialer Richtung zur Drehachse A von einem Radflansch 21 der Nabe 2 erstreckende Mitnehmer 23 auf, die zwischen am inneren Umfang der Bremsscheibe 3 angeordnete, sich in Richtung der Drehachse A erstreckende Stützelemente 33 zahnartig eingreifen.

Die Mitnehmer 23 erstrecken sich dabei axial zur Drehachse A von einem topfartigen oder hohlzylindrischen Abschnitt 22 der Nabe 2, der sich vom Radflansch 21 der Nabe 2 axial erstreckt.

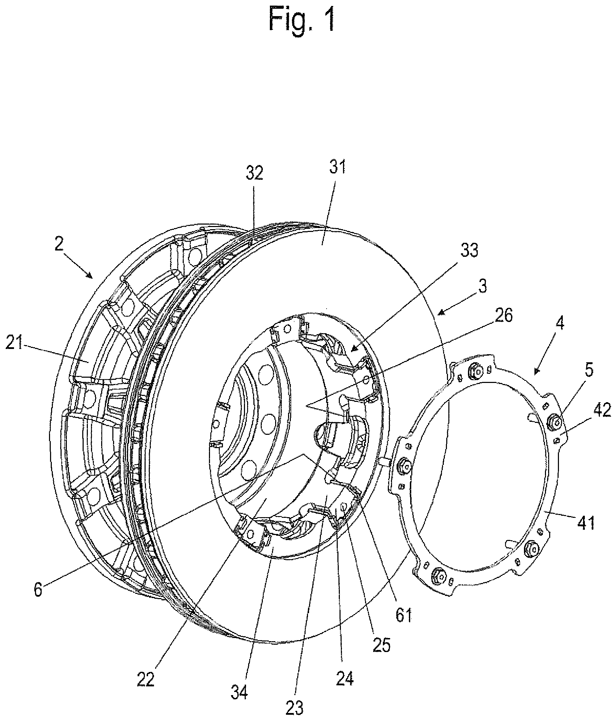

Wie in Fig. 1 des Weiteren gezeigt ist, sind zwischen den Stützelementen 33 der Bremsscheibe 3 und den Mitnehmern 23 der Nabe 2 Zwischenelemente 6 angeordnet.

Diese Zwischenelemente 6 umgreifen dabei die Mitnehmer 23 radial außen und in Umfangsrichtung und liegen an den einander gegenüberstehenden Flanken, deren Fläche bevorzugt radial zur Drehachse A ausgerichtet sind, flächig an.

Die axiale Fixierung der Bremsscheibe 3 erfolgt auf der dem Radflansch 21 zugewandten Seite der Bremsscheibe 3 durch sich von dem topfartigen Abschnitt 22 der Nabe 2 die Mitnehmer 23 in umfänglicher Richtung benachbarte Aufschiebeanschläge 26, gegen die die Bremsscheibe 3 im montierten Zustand axial zur Drehachse A gedrückt wird.

Auf der der Nabe 2 abgewandten Seite der Bremsscheibe 3 erfolgt die axiale Fixierung durch eine hier als Koppelring 4 ausgebildete Koppeleinrichtung.

Dieser Koppelring 4 koppelt die Mitnehmer 23 der Nabe 2 und stützt sich dabei an den Stützelementen 33 der Bremsscheibe 3 ab.

Die Kopplung des Koppelrings 4 mit den Mitnehmern 23 der in dieser Ausführungsvariante fünf Mitnehmer 23 der Nabe 2 erfolgt hier über als Schraubbolzen ausgebildete Befestigungsbolzen 5.

Die Befestigungsbolzen 5 bestehen dabei aus einem Bolzenkopf 51 und einem Bolzenhals mit einem sich an den Bolzenkopf 51 anschließenden Einsteckbereich 52 und einem mit Gewinde versehenen Gewindestück 53, das in entsprechende Gewindebohrungen 25 in den Stirnflächen 24 der Mitnehmer 23 einschraubbar sind.

Zur Fixierung der Bremsscheibe 3 an der Nabe 2 wird der Koppelring 4 auf die Stirnflächen 24 der Mitnehmer 23 und die Stirnflächen 34 der Stützelemente 33 aufgelegt. Anschließend werden die Bolzen 5 durch Bohrungen 43 im Koppelring 4 durchgeführt und in die Gewindebohrungen 25 in den Stirnflächen 24 der Mitnehmer 23 eingeschraubt.

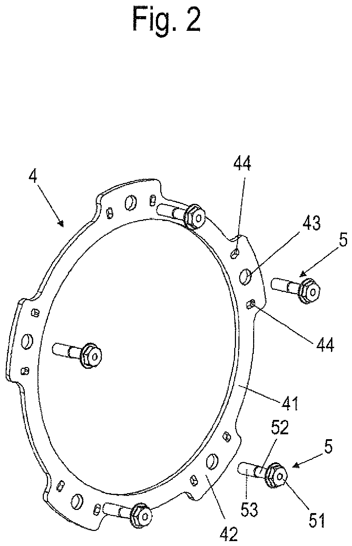

In den Figuren **2****,** **4****,** **5** **und** **6** sind unterschiedliche Ausführungsvarianten eines solchen als Koppelring 4, 7, 8, 10 ausgebildeten Koppeleinrichtung gezeigt.

Gemeinsam ist diesen Koppelringen 4, 7, 8, 10, dass sie einen flachringförmigen Grundkörper 41, 71, 81, 101 aufweisen, mit entsprechenden Bohrungen 43, 73, 83, 102 zur Durchführung der Befestigungsbolzen 5.

Bei der in Fig. 2 gezeigten Ausführungsvariante ist die radiale Breite des Koppelrings 4 in einem sich auf den Mitnehmern 23 der Nabe 2 abstützenden Bereich 42 größer als in einem sich auf den Stützelementen 33 der Bremsscheibe 3 abstützenden Bereich.

Dies ermöglicht eine Vergrößerung der Auflagefläche für den Bolzenkopf 51 auf einer der Nabe 2 abgewandten Außenfläche des Bereichs 42 des Grundkörpers 41 des Koppelrings 4.

Der Koppelring 4 gemäß Fig. 2 weist des Weiteren den Bohrungen 43 zur Aufnahme der Bolzen 5 benachbarte Ausnehmungen 44 auf, in denen sich axial zur Drehachse A erstreckende Fortsätze 61 der zwischen den seitlichen Flanken der Mitnehmer 23 und der Stützelemente 33 der Bremsscheibe 3 angeordnete Zwischenelementen 6 aufnehmbar sind.

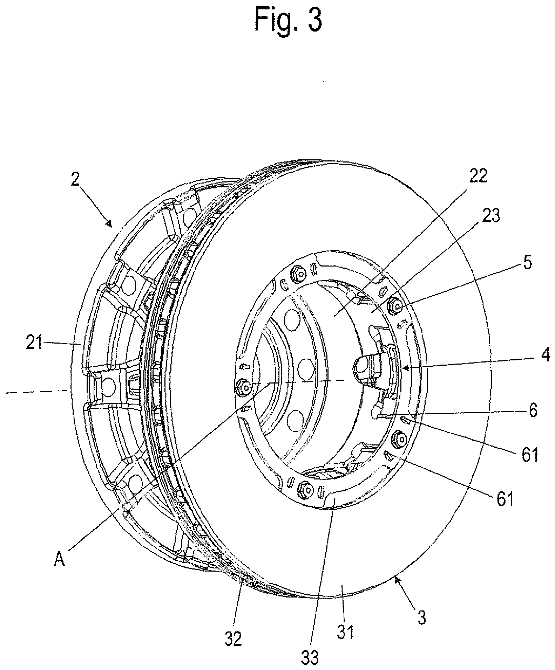

Der montierte Zustand eines solchermaßen ausgebildeten Koppelrings 4 an der Bremsscheibe 3 und der Nabe 2 ist in Fig. 3 dargestellt.

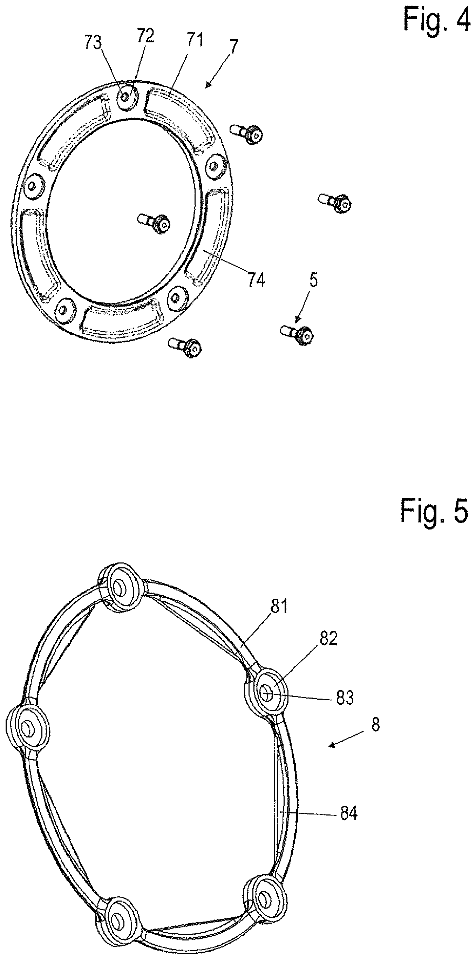

Bei der in Fig. 4 dargestellten alternativen Ausführungsvariante eines Koppelrings 7 sind zur Aufnahme des Bolzenkopfs 51 die die Bohrungen 73 umrandenden Vertiefungen 72 im Grundkörper 71 des Koppelrings 7 angeformt.

Die radiale Breite des Koppelrings 7 ist dabei über den gesamten Koppelring 7 konstant. Die radiale Breite des Koppelrings 7 ist dabei deutlich größer als die axiale Breite des Koppelrings 7.

Zur Versteifung des Grundkörpers 72 des Koppelrings 7 sind bei dieser Ausführungsvariante Sicken 74 in den Grundkörper 71 des Koppelrings 7 eingebracht.

Diese Sicken 74 sind in der hier gezeigten Ausführungsvariante kreissegmentförmig in die Zwischenräume zwischen benachbarten Vertiefungen 72 zur Aufnahme der Bolzenköpfe 51 der Bolzen 5 geformt und von der den Stützelementen 33 der Bremsscheibe 3 abgewandten Seite des Grundkörpers 71 des Koppelrings 7 als Senken eingebracht.

Bei der in Fig. 5 gezeigten Ausführungsvariante der als Koppelring 8 ausgebildeten Koppeleinrichtung sind ebenfalls die Bohrungen 83 umgebende Vertiefungen 82 zur Aufnahme der Bolzenköpfe 51 der Bolzen 5 ausgebildet.

Der die Bolzen 5 aufnehmende Bereich des Koppelrings 8 ist hier zylindrisch geformt.

Die diese zylindrischen Aufnahmen miteinander verbindenden Teile des Grundkörpers 81 sind durch an einem Innenumfang des flachringförmigen Grundkörpers 81 des Koppelrings 8 angeformte Versteifungsflächen 84 zur Erhöhung der Steifigkeit des Koppelrings 8 verstärkt.

Die Versteifungsflächen 84 sind in dieser Ausführungsvariante kreissegmentförmig ausgebildet, mit geradlinigen Innenkanten, mit denen die jeweiligen Bogenabschnitte zwischen den die Bolzen 5 aufnehmenden Vertiefungen 82 versteift werden.

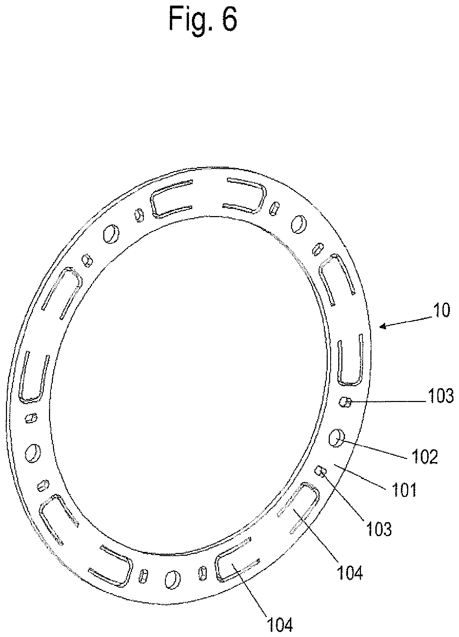

Bei der in Fig. 6 gezeigten Ausführungsvariante des Koppelrings 10 sind wiederum, den Bohrungen 102 im Grundkörper 101 des Koppelrings 10 benachbart, Ausnehmungen 103 zur Aufnahme der Fortsätze 61 der Zwischenelemente 6 eingebracht.

Die radiale Breite dieses Koppelrings 10 ist bei diesem Koppelring 10 konstant.

In den im montierten Zustand auf den Stützelementen 33 der Bremsscheibe 3 aufliegenden Bereichen des Grundkörpers 101 des Koppelrings 10 sind in Richtung der Drehachse A wirkende Federelemente 104 eingebracht.

Diese Federelemente 104 sind hier als aus dem Grundkörper 101 ausgestanzte Zungen ausgebildet, die aus der Ebene des flachringförmigen Grundkörpers 101 des Koppelrings 10 herausgebogen sind.

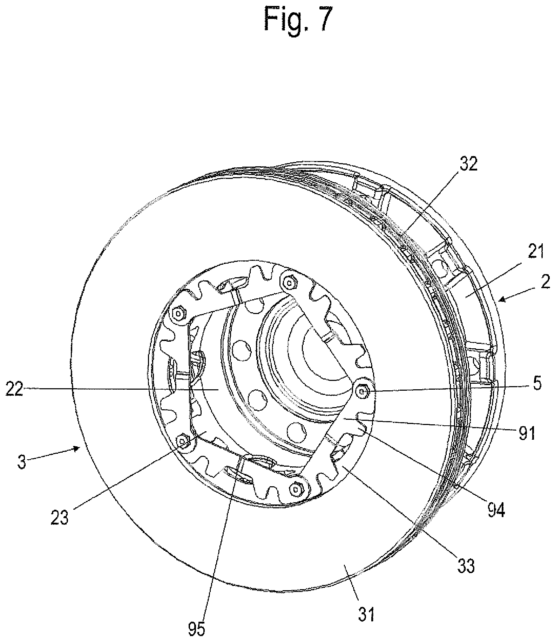

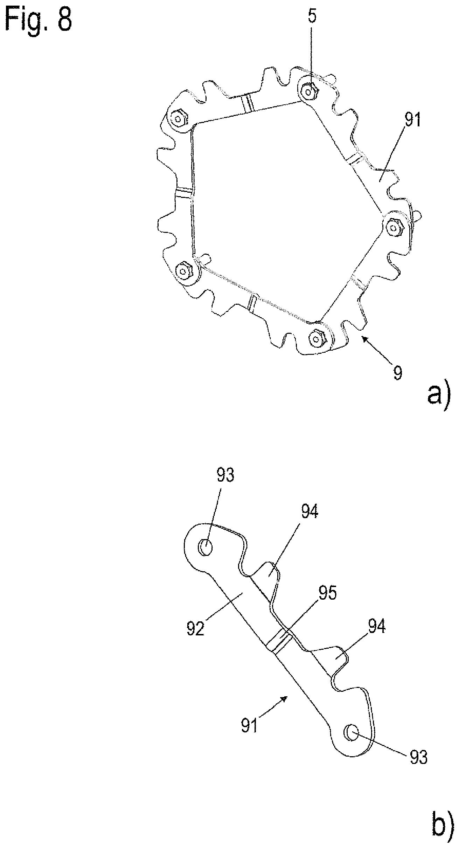

Bei der in den Fig. 7 und **Fig. 8a, 8b**gezeigten Ausführungsvariante besteht die Koppeleinrichtung aus mehreren Koppelelementen 91, bei denen jedes der Koppelelemente 91 wenigstens zwei der Mitnehmer 23 der Nabe 2 miteinander koppelt.

Die Koppelelemente 91 sind in der hier gezeigten Ausführungsvariante so montiert, dass sie zusammen einen Koppelring 9 bilden.

Jedes der Koppelelemente 91 weist dazu jeweilige Bohrungen 93 auf, die bevorzugt in den jeweiligen Enden des Grundkörpers 92 des Koppelelements 91 eingebracht sind. Im montierten Zustand überlappen sich dabei die Enden zweier solcher Koppelelemente 91, so dass jeder der Bolzen 5 durch die Bohrungen 93 zweier solcher Koppelelemente 91 geführt in den Gewindebohrungen der Mitnehmer 23 der Nabe 2 eingeschraubt sind.

Jedes der Koppelelemente 91 weist bevorzugt in Richtung der Drehachse A wirkende Federelemente 94 auf, wobei zumindest ein Teil dieser Federelemente 94 sich im montierten Zustand an den Stützelementen 33 der Bremsscheibe 3 abstützen.

Des Weiteren weist jedes der Koppelelemente 91 bevorzugt einen sich im montierten Zustand radial zur Drehachse A erstreckenden Versatz 95 auf.

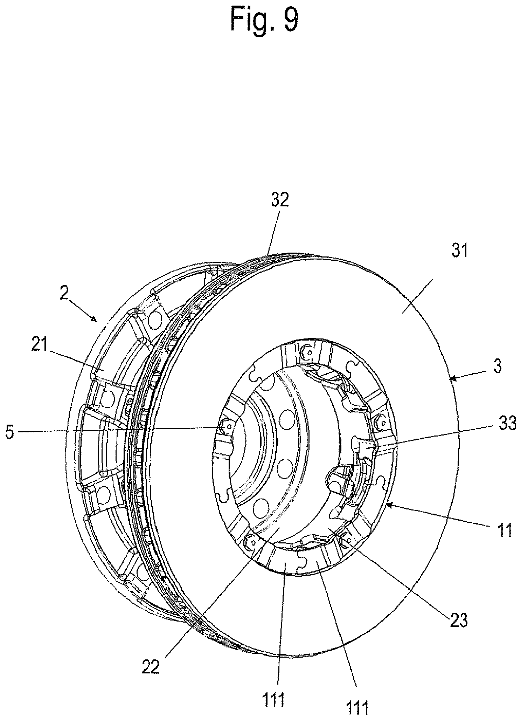

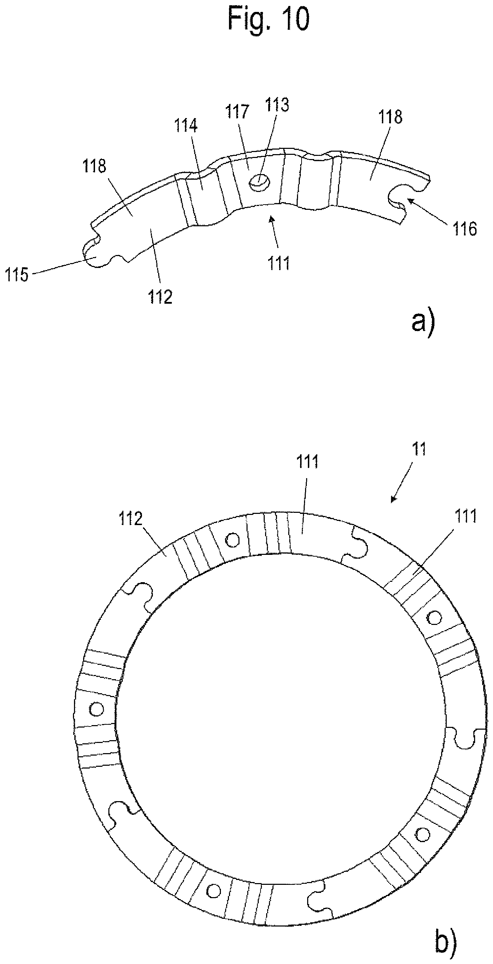

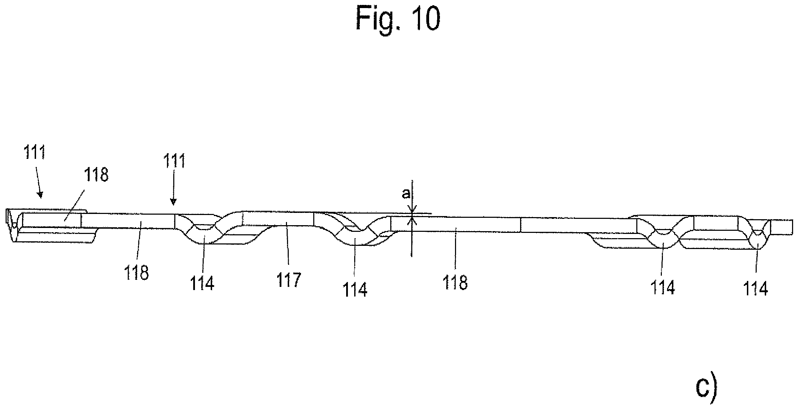

Bei der in den Fig. 9 und **Fig. 10a****,** **10b****,** **10c** gezeigten Ausführungsvariante besteht die Koppeleinrichtung wiederum aus mehreren Koppelelementen 111, bei denen jedes der Koppelelemente 111 an einem der Mitnehmer 23 der Nabe 2 befestigt, insbesondere mit einem jeweiligen Bolzen 5 angeschraubt ist.

Die Koppelelemente 111 sind an ihren Enden 115, 116 so aneinander festgelegt, dass sie zusammen einen Koppelring 11 bilden.

Jedes der Koppelelemente 11 weist eine Bohrung 113 auf, die in eine im montierten Zustand auf einer Stirnfläche 24 eines der Mitnehmer 23 aufliegenden Zwischenebene 117 eingebracht ist. Diese Zwischenebene 117 ist zwischen als Federelemente 114 wirkenden bogenförmigen Segmente angeordnet. An die als Federelemente 114 wirkenden bogenförmigen Segmente schließen sich äußere Ebenen 118 des Grundkörpers 112 des Koppelelements 111 an, die im montierten Zustand auf jeweiligen Stützelementen 33 der Bremsscheibe 3 aufliegen.

Das erste Ende 115 eines Koppelelements 111 und das zweiten Ende 116 eines benachbarten Koppelelements 111 sind in der hier gezeigten Ausführungsvariante als miteinander formschlüssig verbindbare Fügeverbindungsabschnitte ausgebildet, beispielsweise nach Art einer Puzzleteilverbindung. Denkbar ist auch eine Vernietung der beiden Enden 115, 116 benachbarter Koppelelemente 111 oder auch ein stoffschlüssiges Verbinden wie beispielsweise Verschweissen.

Die Zwischenebene 117 ist, wie in Figur 10c gezeigt, relativ zu den beiden äußere Ebenen 118 des Grundkörpers 112 des Koppelelements 111 mit einem Versatz a angeformt. Bei der Montage des Koppelelements 111, bei der die Zwischenebene 117 mithilfe des Bolzens 5 an den Mitnehmer 23 herangezogen wird, erhöht sich der Versatz auf ein noch größeres Maß und erzeugt so eine in Richtung der Drehachse A wirkende Vorspannung.

Sowohl die in Gestalt mehrerer Koppelelemente 91, 111 ausgebildete Koppeleinrichtung als auch die als Koppelring ausgebildeten Koppeleinrichtungen können als Gußbauteile, als Schmiedebauteile oder auch als Sinterbauteile hergestellt sein.

Denkbar ist auch, insbesondere die Koppelelemente 91, 111 als gestanzte Blechbauteile zu fertigen.

### Bezugszeichenliste

- 2: Nabe
- 21: Radflansch
- 22: topfartiger Abschnitt
- 23: Mitnehmer
- 24: Stirnfläche
- 25: Schraubbohrung
- 26: Aufschiebeanschlag

- 3: Bremsscheibe
- 31: erster Reibring
- 32: zweiter Reibring
- 33: Stützelement
- 34: Stirnfläche

- 4: Koppelring
- 41: Grundkörper
- 42: Bereich
- 43: Bohrung
- 44: Ausnehmung

- 5: Bolzen
- 51: Bolzenkopf
- 52: Einsteckbereich
- 53: Gewindestück

- 6: Zwischenelement
- 61: Fortsatz

- 7: Koppelring
- 71: Grundkörper
- 72: Vertiefung
- 73: Bohrung
- 74: Sicke
- 8: Koppelring
- 81: Grundkörper
- 82: Vertiefung
- 83: Bohrung
- 84: Versteifungsfläche

- 9: Koppelring
- 91: Koppelelement
- 92: Grundkörper
- 93: Bohrung
- 94: Federelement
- 95: Versatz

- 10: Koppelring
- 101: Grundkörper
- 102: Bohrung
- 103: Ausnehmung
- 104: Federelement

- 11: Koppelring
- 111: Koppelelement
- 112: Grundkörper
- 113: Bohrung
- 114: Federelement
- 115: erstes Ende
- 116: zweites Ende

- A: Drehachse
- a: Versatz

## Patentansprüche

1. Bremsscheiben/Nabenverbindung, wobei eine Nabe (2) sich in axialer Richtung zu einer der Nabe (2) und einer Bremsscheibe (3) gemeinsamen Drehachse (A) von einem Radflansch (21) der Nabe (2) erstreckende Mitnehmer (23) aufweist, die zwischen am inneren Umfang der Bremsscheibe (3) angeordnete, sich in Richtung der Drehachse (A) erstreckende Stützelemente (33) zahnartig eingreifen, **wobei** die Mitnehmer (23) der Nabe (2) über eine sich an den Stützelementen (33) der Bremsscheibe (3) abstützende, in Umfangsrichtung der Bremsscheibe (3) formstabile als Koppelring ausgebildete Koppeleinrichtung miteinander gekoppelt sind, wobei der Koppelring (4, 7, 8, 10) einen flachringförmigen Grundkörper (41, 71, 81, 101) aufweist, mit Bohrungen (43, 73, 83, 102) zur Durchführung von Befestigungsbolzen (5), wobei die Befestigungsbolzen (5) an den Mitnehmern (23) der Nabe (2) zur in Richtung der Drehachse (A) axialen Sicherung der Bremsscheibe (3) befestigbar sind, **dadurch gekennzeichnet, dass** der Koppelring (4, 10) Ausnehmungen (44, 103) aufweist, in denen sich axial zur Drehachse (A) erstreckende Fortsätze (61) von zwischen seitlichen Flanken der Mitnehmer (23) und der Stützelemente (33) angeordneten Zwischenelementen (6) aufnehmbar sind.

2. Bremsscheiben/Nabenverbindung nach Anspruch 1, **dadurch gekennzeichnet, dass** die Koppeleinrichtung an jeweiligen Stirnflächen (24) der Mitnehmer (23) befestigt, insbesondere verschraubt ist.

3. Bremsscheiben/Nabenverbindung nach Anspruch 1 oder 2, **dadurch gekennzeichnet, dass** die Koppeleinrichtung an jeweiligen der Nabe (2) abgewandten Stirnflächen (34) der Stützelementen (33) der Bremsscheibe (3) anliegen.

4. Bremsscheiben/Nabenverbindung nach einem der vorstehenden Ansprüche, **dadurch gekennzeichnet, dass** die radiale Breite des Koppelrings (4) in einem sich auf den Mitnehmern (23) der Nabe (2) abstützenden Bereich (42) größer ist als in einem sich auf den Stützelementen (33) der Bremsscheibe (3) abstützenden Bereich.

5. Bremsscheiben/Nabenverbindung nach einem der vorstehenden Ansprüche, **dadurch gekennzeichnet, dass** der flachringförmige Grundkörper (101) des Koppelrings (10) mehrere in Richtung der Drehachse (A) wirkende Federelemente (104) aufweist.

6. Bremsscheiben/Nabenverbindung nach einem der vorstehenden Ansprüche, **dadurch gekennzeichnet, dass** die Koppeleinrichtung als Gußbauteil, Schmiedebauteil, Sinterbauteil oder als gestanztes Bauteil ausgebildet ist.

## Claims

1. A brake disc/hub connection, a hub (2) having tappets (23) that extend in an axial direction in relation to an axis of rotation (A) common to the hub (2) and to a brake disc (3) of a wheel flange (21) of the hub (2) and that engage in the manner of teeth between supporting elements (33) that extend in the direction of the axis of rotation (A) and are arranged on the inner circumference of the brake disc (3), the tappets (23) of the hub (20) being coupled together by a coupling device in the form of a coupling ring that is dimensionally stable in the circumferential direction of the brake disc (3) and rests on the supporting elements (33) of the brake disc (3), the coupling ring (4, 7, 8, 10) having a flat annular basic body (41, 71, 81, 101) with holes (43, 73, 83, 102) through which fixing bolts (5) can be passed, it being possible to fasten the fixing bolts (5) to the tappets (23) of the hub (20) in order to secure the brake disc (3) axially in the direction of the axis of rotation (A), **characterised in that** the coupling ring (4, 10) has recesses (44, 103) in which can be received continuations (61) extending axially in relation to the axis of rotation (A) of intermediate elements (6) that are arranged between lateral flanks of the tappets (23) and the supporting elements (33).

2. A brake disc/hub connection according to claim 1, **characterised in that** the coupling device is fixed, in particular screwed, to front faces (24) of the tappets (23).

3. A brake disc/hub connection according claim 1 or 2, **characterised in that** the coupling device abuts front faces (34) of the supporting elements (33) of the disc brake (3) that face away from the hub (2).

4. A brake disc/hub connection according to any one of the preceding claims, **characterised in that** the radial width of the coupling ring (4) is greater in a region (42) resting on the tappets (23) of the hub (2) than in a region resting on the supporting elements (33) of the brake disc (3).

5. A brake disc/hub connection according to any one of the preceding claims, **characterised in that** the flat annular basic body (101) of the coupling ring (10) has a plurality of spring elements (104) acting in the direction of the axis of rotation (A).

6. A brake disc/hub connection according to any one of the preceding claims, **characterised in that** the coupling device takes the form of a cast component, a forged component, a sintered component or a stamped component.

## Revendications

1. Liaison disque de frein/moyeu, dans laquelle un moyeu (2) a des entraîneurs (23), qui s'étendent à partir d'un boudin (21) de roue du moyeu (2) dans une direction axiale par rapport à un axe (A) de rotation commun au moyeu (2) et à un disque (3) de frein et qui pénètrent, à la manière de dents, entre des éléments (33) d'appui, disposés sur le pourtour intérieur du disque (3) de frein et s'étendant dans la direction de l'axe (A) de rotation, les entraîneurs (23) du moyeu (2) étant accouplés les uns aux autres par un dispositif d'accouplement s'appuyant sur les éléments (33) d'appui du disque (3) de frein et constitués sous la forme d'un anneau d'accouplement de forme stable dans la direction du pourtour du disque (3) frein, l'anneau (4, 7, 8, 10) d'accouplement ayant un corps (41, 71, 81, 101) de base en forme d'anneau plat, ayant des trous (43, 73, 83, 102) pour le passage de boulons (5) de fixation, les boulons (5) de fixation pouvant être fixés sur les entraîneurs (23) du moyeu (2) pour la fixation axiale du disque (3) de frein dans la direction de l'axe (A) de rotation, **caractérisé en ce que** l'anneau (4, 10) d'accouplement a des évidements (44, 103), dans lesquels peuvent être logés des prolongements (61), s'étendant axialement par rapport à l'axe (A) de rotation, d'éléments (6) intermédiaires disposés entre des flancs latéraux des entraîneurs (23) et des éléments (33) d'appui.

2. Liaison (10) de frein/moyeu suivant la revendication 1, **caractérisée en ce que** le dispositif d'accouplement est fixé, en étant notamment vissé sur des surfaces (24) frontales respectives des entraîneurs (23).

3. Liaison (10) de frein/moyeu suivant la revendication 1 ou 2, **caractérisée en ce que** le dispositif d'accouplement est en contact avec des surfaces (34) frontales respectives, loin du moyeu (2), des éléments (33) d'appui du disque (3) de frein.

4. Liaison (10) de frein/moyeu suivant l'une des revendications précédentes, **caractérisée en ce que** la largeur radiale de l'anneau (4) d'accouplement dans une partie (42) s'appuyant sur les entraîneurs (23) du moyeu (2) est plus grande que dans une partie s'appuyant sur les éléments (33) d'appui du disque (3) de frein.

5. Liaison (10) de frein/moyeu suivant l'une des revendications précédentes, **caractérisée en ce que** le corps (101) de base en forme d'anneau plat de l'anneau (10) d'accouplement à plusieurs éléments (104) de ressort agissant dans la direction de l'axe (A) de rotation.

6. Liaison (10) de frein/moyeu suivant l'une des revendications précédentes, **caractérisée en ce que** le dispositif d'accouplement est constitué sous la forme d'une pièce coulée, d'une pièce forgée, d'une pièce frittée ou d'une pièce estampée.
